# EUROPEAN PATENT SPECIFICATION

(11) **EP 1 065 898 B1**
(45) Date of publication and mention of the grant of the patent: **24.01.2007**
(21) Application number: 00401545.9
(22) Date of filing: 31.05.2000
(51) Int. Cl.: H04Q 7/22

(54) **Method and system for transmitting data in a radiocommunications system**
Verfahren und System zum Übertragen von Daten in einem Funkkommunikationssystem
Procédé et système pour la transmission de données dans un système de radiocommunication

(30) Priority: 23.06.1999 ES 9901399
(43) Date of publication of application: 03.01.2001
(73) Proprietor: ALCATEL, 75008 Paris (FR)
(72) Inventor: Gonzalez de Prado, Jose Luis, 28043 Madrid (ES)
(74) Representative: Lamoureux, Bernard

(56) References cited:
- US-A- 5 590 133

## Description

### OBJECT OF THE INVENTION

The present invention relates to a method for setting up data communications over voice radio channels belonging to a radiocommunications system, which connects a transport telephone network such as the public switched telephone network to a set of subscribers thereto.

The radiocommunications system makes joint use of time division multiple access (TDMA) and time division duplex (TDD) techniques.

The method of the invention is of special, but not exclusive application, in a digital cordless telecommunications system (DECT) that transmits data packets, such as voice on Internet Protocol, within the voice radio channels and, consequently, makes a more efficient use of the limited radio resources of the DECT radiocommunications system.

### STATE OF THE ART

A method for transmitting data over voice radio channels of a DECT digital cordless telecommunications system is described in the USA Patent No. 5,412,650, titled "Method of, and system for, transmitting data over a communications channel", granted to Davies.

Another example can be found in US5590133.

Some data terminals produce data at a rate less than the radio channel capacity of the DECT system, so that a method is established for inserting the data produced into the radio channels.

Each data terminal is connected to a fixed and/or mobile remote unit, which proposes a radio channel from among those possible, i.e., which offers a good reception level, to a fixed unit with the intention that it confirms the radio channel proposed by the remote unit, in order to use said channel for the data communication.

Some data packets, like IP (Internet Protocol) packets have the characteristic of being of short duration and, consequently, the request and confirmation phase for the proposed radio channel has to be frequently repeated for the desired data communication to be set up.

As a result, both the fixed unit and the remote units absorb much time in resolving the allocation of the possible voice radio channels for data services and, consequently, there is a requirement to establish an allocation procedure for possible radio channels that occupies little time, and thereby improve the overall efficiency with respect to the capacity of the voice radio channels of the DECT system.

### CHARACTERISATION OF THE INVENTION

To overcome the problems described above, a method of radio channel allocation is proposed for data transmission, so that the allocation of said channels is done dynamically in order to obtain high overall efficiency in the radiocommunications system, and also adapts to the traffic conditions in the system at any given time.

The radiocommunications system comprises at least one fixed unit with its associated coverage area in which there is a set of fixed and/or mobile remote units, which communicate by radio with the fixed unit making joint use of time division multiple access (TDMA) and time division duplex (TDD) techniques.

For setting up an optimum common radio channel for data packets at the air interface, for which all remote units are contending (Ethernet type access), each of the remote units draws up and transmits to the fixed unit a list of possible radio channels (with good reception conditions), and the latter selects that or those radio channels which are possible for all the remote units, so that the fixed unit sets up a common radio channel suitable for data packet communications such as voice over IP (Internet Protocol).

The common radio channel set up is formed by, at least, a combination of a carrier frequency and a time slot, and, depending on the traffic in the radiocommunications system, the common radio channel constituted will vary over the course of the day, day of the week, etc.

In brief, the common radio channel can be a multiple channel that comprises several time slots of a carrier frequency and/or several carrier frequencies. The fixed unit broadcasts to the remote units, over a pilot channel, the identification of the common radio channel suitable for establishing data services.

The method of the invention suppresses the request and confirmation stage of the radio channel proposed by the remote unit over a pilot channel, and, thus, when the remote unit has an IP packet to transmit, it inserts it without delay into the common radio channel set up by the fixed unit.

### BRIEF DESCRIPTION OF THE FIGURES

A more detailed explanation of the invention is to be found in the following description, based on the figures attached, in which:
- figure 1 shows a schematic of a radiocommunications system according to the invention,
- figure 2 shows a block diagram of a fixed unit according to the invention, and
- figure 3 shows a block diagram of a remote unit according to the invention.

### DESCRIPTION OF THE INVENTION

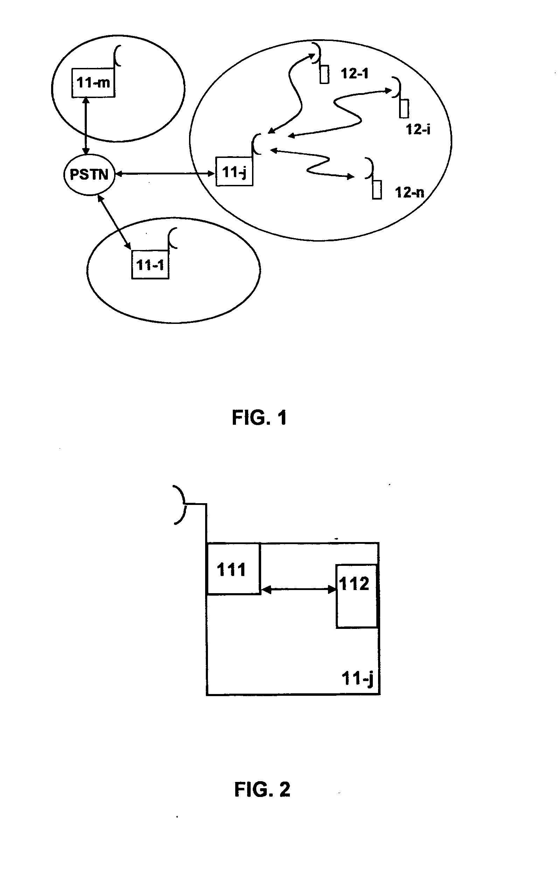

Figure 1 shows a radiocommunications system, such as a DECT digital cordless telecommunications system, which connects by radio subscribers to a telephone transport network, such as a public switched telephone network (PSTN), an Internet (IP) network or any other transport network.

The subscribers, respectively, transmit and/or receive information such as voice, data or any digitised information, to and/or from the telephone network over the DECT radiocommunications system, which comprises a set of fixed units 11-1 to 11-m connected by cable to the telephone network.

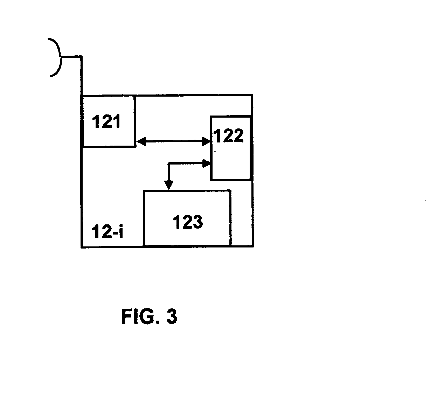

Each fixed unit 11-j (where j = 1, ..., m) has associated with it a coverage area or cell, inside which is located a set of remote units 12-1 to 12-n, fixed and/or mobile, and each remote unit 12-i (where i = 1, ..., n) is connected by cable to at least one subscriber through an Ethernet type data port or access 123 belonging to the remote unit 12-i, as shown in figure 3.

In relation with figures 2 and 3, both the fixed unit 11-j and each remote unit 12-i include, respectively, a first air interface 111 and a second air interface 112, which have a radio receiver and a radio transmitter.

Returning to figure 1, the link between a fixed unit 11-j and a remote unit 12-i is implemented by radio, making joint use of time division multiple access (TDMA) and time division duplex (TDD) techniques.

In the DECT system each of the frequencies, from a frequency bank, is divided into several time slots, these being grouped into frames. Each frame contains a predetermined number of time slots, being grouped into two segments or halves that contain the same number of time slots, one half for each transmission direction, so that one frame has a theoretical maximum of possible traffic channels of, for example, 12 bi-directional traffic channels.

When it is wished to set up a communication from a subscriber connected to a remote unit 12-i, the latter has to propose a radio channel from among those possible to the fixed unit 11-j in order to implement the communication.

The choice of the radio channel (carrier frequency and time slot) that is proposed, is made in the remote unit 12-i using a method of dynamic channel allocation (DCA), which assesses the reception conditions in each possible radio channel and, as a function of these, selects an optimum radio channel.

Once this optimum radio channel has been selected, it is proposed by the remote station 12-i to the fixed unit 11-j. If the fixed unit 11-j sees no inconsistency, it responds with a message confirming the use of the proposed radio channel. This negotiation takes place over a pilot channel set up within the frame.

In brief, confirmation of the proposal to use a time slot in the uplink direction of the communication implies automatic assignation of its duplex time slot in the downlink direction of the communication.

The method according to the invention proposes the setting up of a common radio channel for data packet transmission, for which all remote units 12-1 to 12-n that have a data port 123 contend.

According to the invention that is presented herein, the method for allocating at least one common radio channel for data packet service such as voice over IP (Internet Protocol), is carried out as follows: the remote units 12-1 to 12-n on first entering the system, and following a "Registration Procedure", are interrogated by the fixed unit 11-j, using a reception conditions test message for a determined radio channel, i.e., frequency / time slot pair (DECT "LISTEN" command).

Each remote unit 12-i answers the evaluation proposal with a Good/Poor message. The fixed unit 11-j continues this procedure for all the possible channels, by interrogating all the remote units 12-1 to 12-n, as the latter progressively enter the DECT system.

According to figure 2, the fixed unit 11-j has selection means 112 which, with the answer messages received from the remote units 12-1 to 12-n, select a subset of time slots on one of the frequencies, optimum for all the remote units 12-1 to 12-n. Thus, the channel selected is a common radio channel for data service, which comprises a set of radio channels possible and common for all the remote units 12-1 to 12-n.

Next, the common radio channel for packets is broadcast to all the remote units 12-1 to 12-n over the pilot channel, that it is being used by the fixed unit 11-j to broadcast information relative to the operation of the DECT system, such as next frequency that will be tuned for reception in the following frame, etc. Generally, the pilot channel is a radio channel not activated for traffic.

In brief, the common radio channel is reserved for data packet service, in both transmission directions, and the rest of the radio channels in the frame are used for voice service.

The common radio channel shall be formed by, at least, one time slot and one carrier frequency. However, the constitution of the channel shall vary as a function of the DECT system traffic conditions, and can be formed by several time slots of one frequency or of several frequencies from the carrier frequency bank, a multiple channel being obtained so that fragmenting of the IP packets is avoided on any occasion.

In relation to figure 3, during normal operation of the DECT system, when an end subscriber starts a set-up process for a packet call, and once the common radio channel established by the fixed unit 11-j is known, fragmenting means 122 belonging to the remote unit 12-i continuously adjusts or adapts the packets (fragmentation) to the transport capacity of the common channel at any given time, i.e., number of channels of which it is made up.

As the IP packets originated by the subscriber are characteristically short in duration, the common channel can transport information relative to several subscribers.

The selector means 112 include a common channel access management procedure whereby, as a function of the packets correctly received and of the collisions detected, it sends in the downlink direction, making use of the signalling field (A) of the common radio channel itself, the necessary acknowledgement messages regarding correctly received packets.

The remote units 12-1 to 12-n transmit packets and voice separately, using the normal procedure employed by DECT circuits for voice communications.

In brief, the fixed unit 11-j establishes a common radio channel for IP packet service as a function of the possible radio channels, with good reception quality, sent from the set of remote units 12-1 to 12-n located within its coverage area.

The common radio channel is updated dynamically and periodically by the fixed unit 11-j on a basis of the information received from the remote units 12-1 to 12-n.

## Claims

1. - Method for transmitting data in a radiocommunications system comprising at least one fixed unit (11-j), which has an associated coverage area in which is located a group of remote units (12-1 to 12-n), fixed and/or mobile, which make joint use of time division multiple access (TDMA) and time division duplex (TDD) techniques, such that at least one remote unit (12-i) comprises an access (123) for Ethernet type data; **characterised in that** an optimum common radio channel is selected for data communications for said remote units (12-1 to 12-n), via selector means (112) included in said fixed unit (11-j), the selection being performed as a function of the possible radio channels proposed by said remote units (12-1 to 12-n) at any given time.

2. Method for transmitting data according to claim 1, **characterised in that** said common radio channel comprises at least one carrier frequency and a time slot in each frame of a multiframe.

3. Method for transmitting data according to any of claims 1 and 2, **characterised in that** the identity of said common radio channel is broadcast by means of a pilot channel within said multiframe.

4. Method for transmitting data according to claim 3, **characterised in that** the data are fragmented into packets by fragmenting means (122) included in said remote unit (12-i), as a function of the constitution of said common radio channel at any given time, and said data packets are transmitted within said common radio channel.

5. - System for transmitting data in a radiocommunications system comprising at least one fixed unit (11-j) that has an associated coverage area in which is located a group of remote units (12-1 to 12-n), such that they make joint use of time division multiple access (TDMA) and time division duplex (TDD) techniques for setting up data communications, and such that at least one remote unit (12-i) comprises an access (123) for Ethernet type data; **characterised in that** selection means (112) included within said fixed unit (11-j) select an optimum common radio channel for data communications for said remote units (12-1 to 12-n), as a function of the possible radio channels proposed by said remote units (12-1 to 12-n) at any given time.

6. System for transmitting data according to claim 5, **characterised in that** said fixed unit (11-j) comprises a first air interface (112) for broadcasting the identity of said common radio channel over a pilot channel in the downlink direction of the transmission.

7. System for transmitting data according to claim 6, **characterised in that** said remote unit (12-i) comprises a second air interface (121) for receiving said pilot channel, being connected to fragmenting means (122) which, in turn, are connected to an access (123) for Ethernet type data.

8. System for transmitting data according to claim 7, **characterised in that** said fragmenting means (122) register the identity of said common radio channel for fragmenting the data received from said access (123) for Ethernet type data according to the constitution of said common radio channel.

## Patentansprüche

1. Verfahren zum Übertragen von Daten in einem Funkkommunikationssystem, umfassend mindestens eine feste Einheit (11-j), der ein dazugehöriger Funkabdeckungsbereich zugeordnet ist, in dem sich eine Gruppe von festen und/oder mobilen Remote-Einheiten (12-1 bis 12-n) befindet, die gemeinsam Zeitmultiplex- (TDMA) und Zeitduplex- (TDD) Techniken in einer Weise nutzen, dass mindestens eine Remote-Einheit (12-i) einen Zugang (123) für Daten des Ethernet-Typs aufweist; **dadurch gekennzeichnet, dass** ein optimaler gemeinsamer Funkkanal für Datenkommunikationen für diesem Remote-Einheiten (12-1 bis 12-n) über in der festen Einheit (11-j) enthaltene Auswahlmittel (112) ausgewählt wird, wobei die Auswahl in Abhängigkeit von den möglichen Funkkanälen erfolgt, die von den Remote-Einheiten (12-1 bis 12-n) zu einem beliebigen gegebenen Zeitpunkt vorgeschlagen werden.

2. Verfahfen zum Übertragen von Daten nach Anspruch 1, **dadurch gekennzeichnet, dass** der gemeinsame Funkkanal mindestens eine Trägerfrequenz und einen Zeitschlitz in jedem Übertragungsrahmen eines Mehrfachrahmens umfasst.

3. Verfahren zum Übertragen von Daten nach einem der Ansprüche 1 und 2, **dadurch gekennzeichnet, dass** die Identität des gemeinsamen Funkkanals über einen Pilotkanal innerhalb des Mehrfachrahmens durch Rundsenden übermittelt wird.

4. Verfahren zum Übertragen von Daten nach Anspruch 3, **dadurch gekennzeichnet, dass** die Daten durch in der Remote-Einheit (12-i) enthaltene Fragmentierungsmittel (122) in Pakete fragmentiert werden, und zwar in Abhängigkeit vom Aufbau des gemeinsamen Funkkanals zu einem beliebigen gegebenen Zeitpunkt, und **dadurch**, dass die Datenpakete innerhalb des gemeinsamen Funkkanals übertragen werden.

5. System zum Übertragen von Daten in einem Funkkommunikationssystem, umfassend mindestens eine feste Einheit (11-j), der ein dazugehöriger Funkabdeckungsbereich zugeordnet ist, in dem sich eine Gruppe von Remote-Einheiten (12-1 bis 12-n) befindet, die gemeinsam Zeitmultiplex- (TDMA) und Zeitduplex- (TDD) Techniken zum Einrichten von Datenkommunikationen nutzen, und zwar in einer Weise, dass mindestens eine Remote-Einheit (12-i) einen Zugang (123) für Daten des Ethernet-Typs aufweist; **dadurch gekennzeichnet, dass** in der festen Einheit (11-j) enthaltene Auswahlmittel (112) einen optimalen gemeinsamen Funkkanal für Datenkommunikationen für die Remote-Einheiten (12-1 bis 12-n) auswählen, und zwar in Abhängigkeit von den möglichen Funkkanälen, die von den Remote-Einheiten (12-1 bis 12-n) zu einem beliebigen gegebenen Zeitpunkt vorgeschlagen werden.

6. System zum Übertragen von Daten nach Anspruch 5, **dadurch gekennzeichnet, dass** die feste Einheit (11-j) eine erste Funkschnittstelle (112) zum Rundsenden der ldentität des gemeinsamen Funkkanals über einen Pilotkanal in der Downlink-Richtung der Übertragung umfasst.

7. System zum Übertragen von Daten nach Anspruch 6, **dadurch gekennzeichnet, dass** die Remote-Einheit (12-i) eine zweite Funkschnittstelle (121) zum Empfangen des Pilotkanals umfasst, wobei sie mit Fragmentierungsmitteln (122) verbunden ist, die ihrerseits mit einem Zugang (123) für Daten des Ethernet-Typs verbunden sind.

8. System zum Übertragen von Daten nach Anspruch 7, **dadurch gekennzeichnet, dass** die Fragmentierungsmittel (122) die identität des gemeinsamen Funkkanals registrieren, um die von dem Zugang (123) für Daten des Ethernet-Typs empfangenen Daten entsprechend dem Aufbau des gemeinsamen Funkkanals zu fragmentieren.

## Revendications

1. Procédé de transmission de données dans un système de radiocommunications comprenant au moins une unité fixe (11-j), laquelle a une zone de couverture associée dans laquelle se trouve un groupe d'unités distantes (12-1 à 12-n), fixes et/ou mobiles, lesquelles utilisent conjointement des techniques d'accès multiple par répartition dans le temps (AMRT) et de duplexage par répartition dans le temps (DRT), de telle sorte qu'au moins une unité distante (12-i) comprenne un accès (123) pour des données de type Ethernet ; **caractérisé en ce qu'**un canal radio commun optimum est sélectionné pour les communications de données desdites unités distantes (12-1 à 12-n), par l'intermédiaire de moyens de sélection (112) inclus dans ladite unité fixe (11-j), la sélection étant effectuée en fonction des canaux radio possibles proposés par lesdites unités distantes (12-1 à 12-n) à n'importe quel moment donné.

2. Procédé de transmission de données selon la revendication 1, **caractérisé en ce que** ledit canal radio commun comprend au moins une fréquence porteuse et une tranche de temps dans chaque trame d'une multitrame.

3. Procédé de transmission de données selon l'une quelconque des revendications 1 et 2, **caractérisé en ce que** l'identité dudit canal radio commun est diffusée au moyen d'un canal pilote dans ladite multitrame.

4. Procédé de transmission de données selon ta revendication 3, **caractérisé en ce que** les données sont fragmentées en paquets par des moyens de fragmentation (122) inclus dans ladite unité distante (12-i), en fonction de la constitution dudit canal radio commun à n'importe quel moment donné, et lesdits paquets de donnée sont transmis dans ledit canal radio commun.

5. Système de transmission de données dans un système de radiocommunications comprenant au moins une unité fixe (11-j), laquelle a une zone de couverture associée dans laquelle se trouve un groupe d'unités distantes (12-1 à 12-n), de telle sorte qu'elles utilisent conjointement des techniques d'accès multiple par répartition dans le temps (AMRT) et de duplexage par répartition dans le temps (DRT) pour établir des communications de données, et de telle sorte qu'au moins une unité distante (12-i) comprenne un accès (123) pour des données de type Ethernet ; **caractérisé en ce que** des moyens de sélection (112) inclus dans ladite unité fixe (11-j) sélectionnent un canal radio commun optimum pour les communications de données desdites unités distantes (12-1 à 12-n), en fonction des canaux radio possibles proposés par lesdites unités distantes (12-1 à 12-n) à n'importe quel moment donné.

6. Système de transmission de données selon la revendication 5, **caractérisé en ce que** ladite unité fixe (11-j) comprend une première interface radio (112) pour diffuser l'identité dudit canal radio commun sur un canal pilote dans le sens de liaison aval de la transmission.

7. Système de transmission de données selon la revendication 6, **caractérisé en ce que** ladite unité distante (12-i) comprend une seconde interface radio (121) pour recevoir ledit canal pilote, étant connecté à des moyens de fragmentation (122) lesquels, à leur tour, sont connectés à un accès (123) pour des données de type Ethernet.

8. Système de transmission de données selon la revendication 7, **caractérisé en ce que** lesdits moyens de fragmentation (122) enregistrent l'identité dudit canal radio commun pour fragmenter les données reçues depuis ledit accès (123) pour des données de type Ethernet en fonction de la constitution dudit canal radio commun.
